# EUROPEAN PATENT SPECIFICATION

(11) **EP 2 934 029 B1**
(45) Date of publication and mention of the grant of the patent: **22.05.2019**
(21) Application number: 15160387.5
(22) Date of filing: 23.03.2015
(51) Int. Cl.: H04W 8/00, H04W 76/14, H04L 29/12

(54) **LINKING METHOD BETWEEN COMMUNICATION DEVICES AND RELATED MACHINE READABLE MEDIUM**
VERKNÜPFUNGSVERFAHREN ZWISCHEN KOMMUNIKATIONSVORRICHTUNGEN UND ZUGEHÖRIGES MASCHINENLESBARES MEDIUM
PROCÉDÉ DE LIAISON ENTRE DES DISPOSITIFS DE COMMUNICATION ET SUPPORT LISIBLE PAR MACHINE ASSOCIÉE

(30) Priority: 14.04.2014 US 201414251665
(43) Date of publication of application: 21.10.2015
(73) Proprietor: MediaTek Inc., Hsin-Chu 300 (TW)
(72) Inventor: Tsai, Yu-Che, 300 Hsinchu City (TW); Chen, Shao-Wei, 234 New Taipei City (TW)
(74) Representative: Hoefer & Partner Patentanwälte mbB

(56) References cited:
- WO-A1-2013/145045
- US-A1- 2012 290 731

## Description

The present invention relates to several linking methods.

Linking methods are for example disclosed in the documents WO 2013/145045 A1, EP 2 833 658 A1 and US 2012/0290731 A1.

Each of the documents WO 2013/145045 A1 and EP 2 833 658 A1 discloses an address determination method for a radio terminal, wherein a first radio base station is performing a step of transmitting an address offer request to a second radio base station. The first radio base station is further performing a step of receiving allocated address information from the second radio base station, wherein the allocated address information comprises IP addresses which are used by the second radio base station. The first radio base station is further performing a step of offering an address to the radio terminal, wherein the address offered to the radio terminal is different from any one of the addresses comprised in the allocated address information

Document US 2012/0290731 A1 discloses a linking method between an initiator and a selector, wherein the initiator is not a member of an existing ad hoc network and the selector is a member of an existing ad hoc network. Thereby, the selector may assign a random link local IP address for use by the initiator. Further, the selector may check that the IP address assigned for the initiator is not already used in the existing ad hoc network. If no conflict is determined to exist, the selector may send a message comprising the assigned IP address for the initiator. The initiator may receive the message and may then interact with the selector using the IP address comprised in the message. Document US 2012/0290731 A1 further discloses a linking method between an initiator and a selector, wherein the initiator is a member of an existing ad hoc network and the selector is not a member of an existing ad hoc network. Thereby, the initiator may assign a random link local IP address for use by the selector. Further, the initiator may check that the IP address assigned for the selector is not already used in the existing ad hoc network. If no conflict is determined to exist, the initiator may send a message comprising the assigned IP address for the selector. The selector may receive the message and may then interact with the initiator using the IP address comprised in the message

Applications that enable devices to directly connect with each other without requiring an intermediate device are growing popular. For instance, Wi-Fi Direct (initially called Wi-Fi P2P) is a Wi-Fi standard that enables devices to connect easily with each other without requiring a wireless access point, enabling communication at typical Wi-Fi speeds for everything from file transfer to Internet connectivity. Wi-Fi Direct devices can connect one-to-one or one-to-many, which means that the Wi-Fi Direct devices may have more than one link at the same time.

In the course of forming a link between two Wi-Fi Direct devices, the two devices will not realize the information associated with already existing link(s). As a result, an IP conflict may take place when a same IP domain as that of any existing link(s) is assigned when the new link is established. In this case, the condition that one of the Wi-Fi Direct devices has two links assigned with the same IP domain address at the same time will take place and cause a problem. Conventionally, the best option is to manually adjust these IP domain addresses so as to avoid conflicts. Such a solution is inefficient and troublesome, however, since the conflicts may remain unsolved for a long time and keep users waiting. The IP conflict issue in the field of P2P applications therefore needs to be addressed.

This in mind, the present invention aims at providing linking methods and a corresponding device to solve the above-mentioned problems.

This is achieved by a linking method employed by a first communication device according to claim 1 and by a first communication device according to claim 4. The dependent claims pertain to corresponding further developments and improvements.

In the following, the invention is illustrated by way of example, taking reference to the accompanying drawings. Thereof
- FIG. 1: is a diagram illustrating an example of performing link formation between two Wi-Fi Direct devices,
- FIG. 2: is a flowchart illustrating a linking method employed by a first communication device according to an embodiment of the present invention,
- FIG. 3: is a flowchart illustrating a linking method for a communication system according to another embodiment of the present invention,
- FIG. 4: is a flowchart illustrating a linking method employed by a first communication device according to yet another embodiment of the present invention,
- FIG. 5: is a flowchart illustrating a linking method for a communication system according to yet another embodiment of the present invention, and
- FIG. 6: is a diagram illustrating a computer system for performing a linking method according to an exemplary embodiment of the present invention.

One of the technical features of the present invention is to avoid IP domain address conflict when establishing a link between P2P devices such as two Wi-Fi Direct devices. Two main methods are disclosed, wherein one method comprises exchanging each device's network domain information concerning existing links while performing link formation or link negotiation; and the other method comprises determining a network domain address in a random manner while performing link formation or link negotiation. Further details are described in the following.

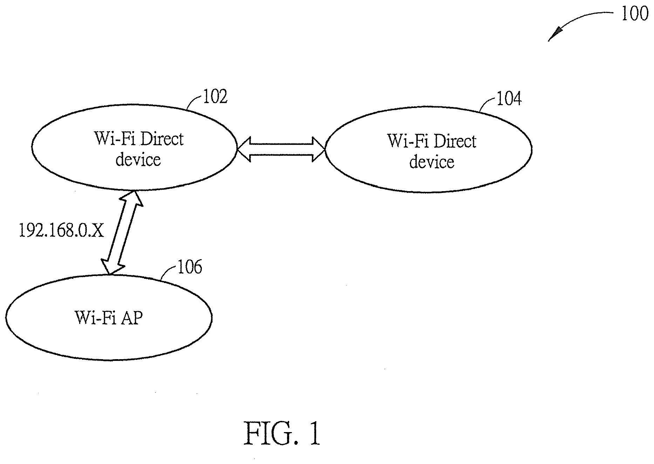

For better understanding of the technical features of the present invention, please refer to FIG. 1, which is a diagram illustrating link formation between two Wi-Fi Direct devices . Suppose a Wi-Fi Direct device 102 and a Wi-Fi Direct device 104 in a communication system 100 are performing link formation as a result of the Wi-Fi Direct device 102 inviting the Wi-Fi Direct device 104 or *vice versa.* In the course of the formation process according to the Wi-Fi Direct standard, one of the two Wi-Fi Direct devices 102 and 104 will be the Group Owner (GO), while the other will be the Group Client (GC). Conventionally, a network domain address is assigned by the GO unilaterally, and the network domain addresses are often generated monotonously and prone to repeat. In contrast to the conventional design, the present invention proposes exchanging network domain information between the two link partners, the network domain information indicating a network domain address of each link currently used by the two link partners (i.e. the GO and the GC), and using this information as the basis of further actions.

As shown in FIG. 1, the Wi-Fi Direct device 102 has an existing link with a Wi-Fi access point (AP) 106, and the network domain address assigned to the link is, for example, 192.168.0.X. According to the present invention, the Wi-Fi Direct device 102 transmits network domain information to the Wi-Fi Direct device 104 to notify the Wi-Fi Direct device 104 that a network domain address 192.168.0.X is occupied and should not be reassigned till the link with the Wi-Fi AP 106 is disconnected, to prevent IP address conflict. The Wi-Fi Direct device 104 may also transmit network domain information to the Wi-Fi Direct device 102 to notify the Wi-Fi Direct device 102 that no network domain address is currently used or occupied by the Wi-Fi Direct device 104. The network domain information sent by the Wi-Fi Direct device 104 indicates a network domain address of each link currently used by the Wi-Fi Direct device 104; similarly, the network domain information sent by the Wi-Fi Direct device 102 may indicate a network domain address of each link currently used by the Wi-Fi Direct device 102. Moreover, the network domain information may also include network domain addresses used by other devices connected to the Wi-Fi Direct devices 102 and/or 104. With the help of the exchanged network domain information, both the Wi-Fi Direct device 102 and the Wi-Fi Direct device 104 are capable of grasping the instant usage situation of the respective network domain addresses.

After the GO is determined, the GO will determine whether to establish a new link between the Wi-Fi Direct device 102 and the Wi-Fi Direct device 104. For instance, if the network domain address is manually forced by a user and the GO judges that the manually forced address will cause IP address conflict, the GO may determine not to establish the new link between the Wi-Fi Direct device 102 and the Wi-Fi Direct device 104. This is for illustrative purposes only, and not a limitation of the present invention. If the GO determines that the situation is qualified and it is safe to establish the new link under provisions of the standard it complies with, the GO will determine a network domain address of the link according to the network domain information of GO and GC. Specifically, the GO will select a specific network domain address different from 192.168.0.X as the network domain address for the new link between the Wi-Fi Direct device 102 and the Wi-Fi Direct device 104. IP address conflict can be easily avoided without requiring too much effort and time. If the GO has run out of IP addresses, i.e. no more different IP addresses can be provided for the new link, the GO may determine not to establish the new link. It should be noted that applying the proposed link formation method with reference to exchanged domain address information to Wi-Fi Direct devices is not meant to be a limitation of the present invention. By way of example, but not a limitation, the present invention may be applied to other wireless P2P standards, or even wired (cable) internet systems, and these applications employing the proposed link formation method all fall within the scope of the present invention.

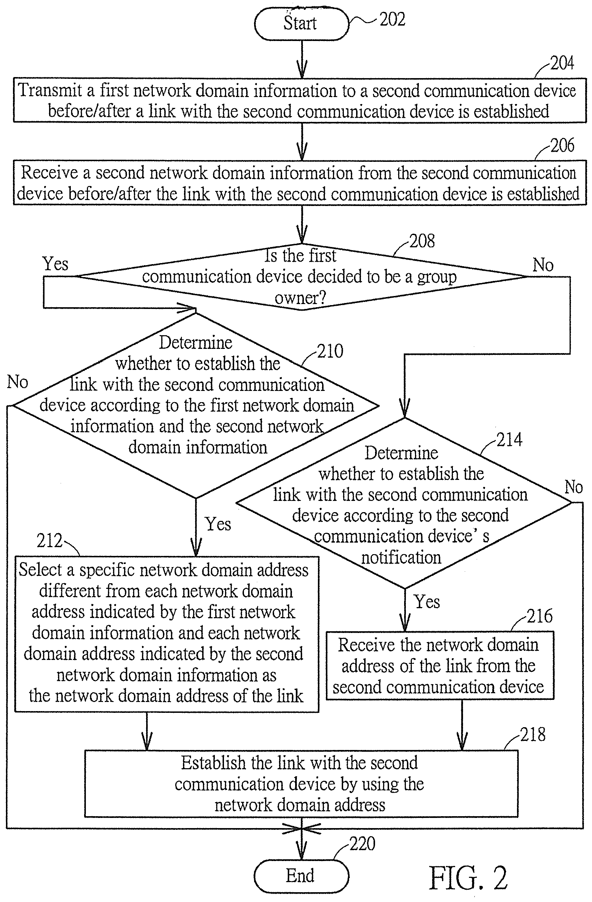

FIG. 2 is a flowchart illustrating a linking method employed by a first communication device (e.g. one Wi-Fi Direct device) according to an embodiment of the present invention. Provided that substantially the same result is achieved, the steps of the flowchart shown in FIG. 2 need not be in the exact order shown and need not be contiguous; that is, other steps can be intermediate. Some steps in FIG. 2 may be omitted according to various embodiments or requirements.

The linking method may include the following steps.

| | |
|---|---|
| Step 202: | Start. |
| Step 204: | Transmit a first network domain information to a second communication device (e.g. another Wi-Fi Direct device) before/after a link with the second communication device is established. |
| Step 206: | Receive a second network domain information from the second communication device before/after the link with the second communication device is established. |
| Step 208: | Determine whether the first communication device is a group owner? If yes, go to step 210; otherwise, go to step 214. |
| Step 210: | Determine whether to establish the link with the second communication device according to the first network domain information and the second network domain information. If yes, go to step 212; otherwise, go to step 220. |
| Step 212: | Select a specific network domain address different from each network domain address indicated by the first network domain information and each network domain address indicated by the second network domain information as the network domain address of the link. |
| Step 214: | Determine whether to establish the link with the second communication device according to the second communication device's notification. If yes, go to step 216; otherwise, go to step 220. |
| Step 216: | Receive the network domain address of the link from the second communication device. |
| Step 218: | Establish the link with the second communication device by using the network domain address. |
| Step 220: | End. |

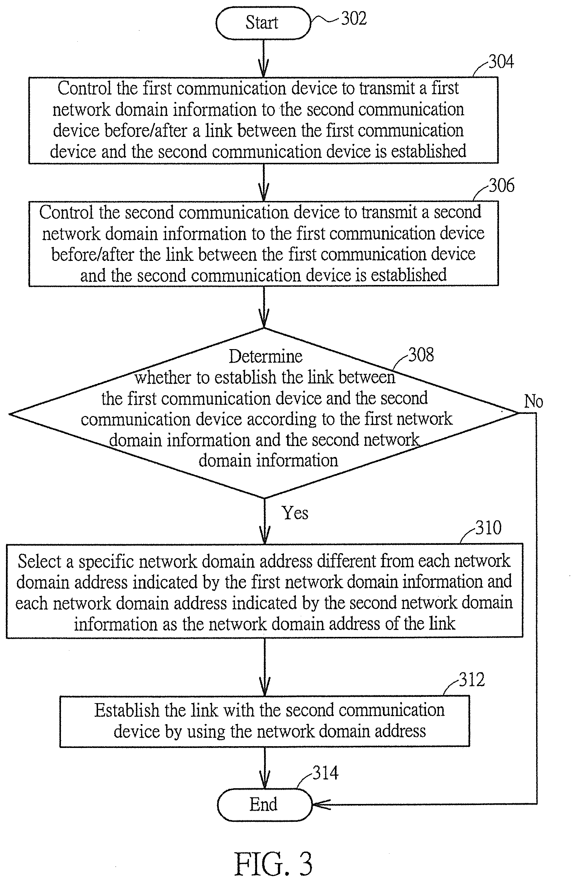

Please refer to FIG. 3, which is a flowchart illustrating a linking method for a communication system (e.g. the communication system 100 having two Wi-Fi Direct devices 102, 104) according to another embodiment of the present invention. Provided that substantially the same result is achieved, the steps of the flowchart shown in FIG. 3 need not be in the exact order shown and need not be contiguous; that is, other steps can be intermediate. Some steps in FIG. 3 may be omitted according to various embodiments or requirements. The linking method may include the following steps.

| | |
|---|---|
| Step 302: | Start. |
| Step 304: | The first communication device (e.g. one Wi-Fi Direct device) transmits a first network domain information to the second communication device (e.g., another Wi-Fi Direct device) before/after a link between the first communication device and the second communication device is established. |
| Step 306: | The second communication device transmits a second network domain information to the first communication device before/after the link between the first communication device and the second communication device is established. |
| Step 308: | Determine whether to establish the link between the first communication device and the second communication device according to the first network domain information and the second network domain information. If yes, go to step 310; otherwise, go to step 314. |
| Step 310: | Select a specific network domain address different from each network domain address indicated by the first network domain information and each network domain address indicated by the second network domain information as the network domain address of the link. |
| Step 312: | Establish the link with the second communication device by using the selected network domain address. |
| Step 314: | End. |

As a person skilled in the art can readily understand the details of the steps shown in FIG. 2 and FIG. 3 after reading the above paragraphs directed to the linking method shown in FIG. 1, further description is omitted here for brevity.

An alternative design of the present invention is disclosed herein. Please refer to FIG. 1 again. Suppose the Wi-Fi Direct device 102 and the Wi-Fi Direct device 104 are performing link formation, and the Wi-Fi Direct device 102 has an existing link (192.168.0.X) with a Wi-Fi AP 106. In this embodiment, after the GO is determined, the GO will determine a network domain address for the new link in a random manner. The GO will generate a network domain address randomly and unilaterally assign the randomly generated network domain address to the new link. Compared with the network domain addresses assigned in the conventional design which are often generated in a serial manner and prone to repeat, the proposed domain address randomization method can dramatically decrease the probability of IP address conflict.

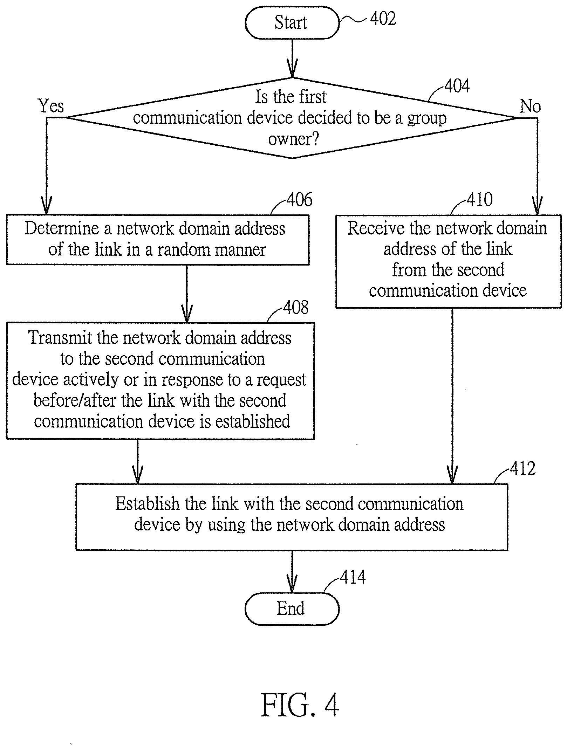

FIG. 4 is a flowchart illustrating a linking method employed by a first communication device (e.g. one Wi-Fi Direct device) according to yet another embodiment of the present invention. Provided that substantially the same result is achieved, the steps of the flowchart shown in FIG. 4 need not be in the exact order shown and need not be contiguous; that is, other steps can be intermediate. Some steps in FIG. 4 may be omitted according to various embodiments or requirements. The linking method may include the following steps.

| | |
|---|---|
| Step 402: | Start. |
| Step 404: | Determine whether the first communication device is a group owner? If yes, go to step 406; otherwise, go to step 410. |
| Step 406: | Determine a network domain address of the link in a random manner. |
| Step 408: | Transmit the network domain address to a second communication device (e.g. another Wi-Fi Direct device) actively or in response to a request before/after the link with the second communication device is established. |
| Step 410: | Receive the network domain address of the link from the second communication device. |
| Step 412: | Establish the link with the second communication device by using the network domain address. |
| Step 414: | End. |

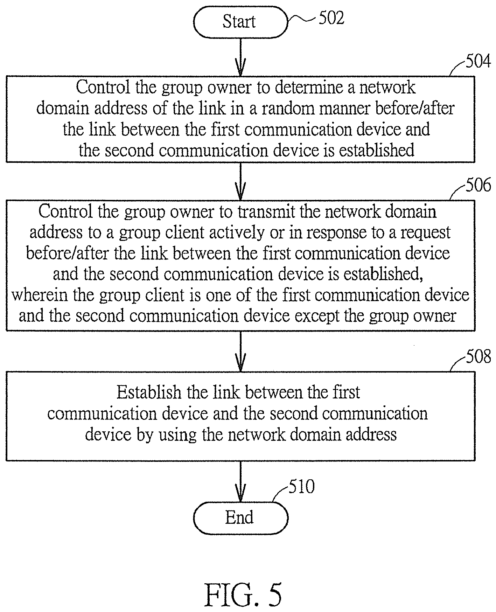

Please refer to FIG. 5, which is a flowchart illustrating a linking method for a communication system (e.g. the communication system 100 having two Wi-Fi Direct devices 102, 104) according to yet another embodiment of the present invention. Provided that substantially the same result is achieved, the steps of the flowchart shown in FIG. 5 need not be in the exact order shown and need not be contiguous; that is, other steps can be intermediate. Some steps in FIG. 5 may be omitted according to various embodiments or requirements. The linking method may include the following steps.

| | |
|---|---|
| Step 502: | Start. |
| Step 504: | The group owner determines a network domain address of the link in a random manner before/after the link between the first communication device and the second communication device (e.g. Wi-Fi Direct devices 102 and 104) is established. |
| Step 506: | The group owner transmits the network domain address to a group client actively or in response to a request of the group client before/after before/after the link between the first communication device and the second communication device is established, wherein the group client is one of the first communication device and the second communication device apart from the group owner. |
| Step 508: | Establish the link between the first communication device and the second communication device by using the network domain address. |
| Step 510: | End. |

As a person skilled in the art can readily understand the details of each step shown in FIG. 4 and FIG. 5 after reading the above paragraphs associated with the linking method which randomly generates the network domain address, further description is omitted here for brevity.

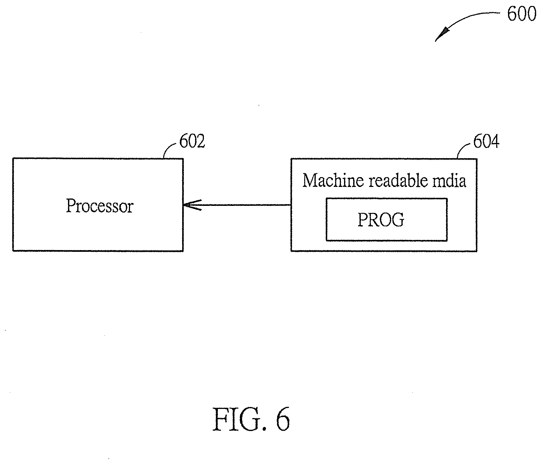

Please refer to FIG. 6, which is a diagram illustrating a computer system for performing a linking method according to an exemplary embodiment of the present invention. The computer system 600 may be implemented in either or both of the Wi-Fi Direct devices 102 and 104. The computer system 600 includes a processor 602 and a non-transitory machine readable medium 604. For instance, the computer system 600 could be a personal computer, and the non-transitory machine readable medium 604 could be any storage device capable of storing data in a personal computer, e.g. volatile memory, non-volatile memory, hard disk, CD-ROM, etc. In this embodiment, the non-transitory machine readable medium 604 stores a program code PROG, wherein when the program code PROG is loaded and executed by the processor 602, the program code PROG enables the processor 602 to perform the disclosed linking method (i.e. steps 202-220 shown in FIG. 2, or steps 402-414 shown in FIG. 4) of the present invention. As those skilled in the art should readily understand the link establish control realized by the processor 602 executing the program code PROG, further description will be omitted here for brevity.

## Claims

1. A linking method employed by a first communication device (102, 104) to establish a link with a second communication device (102, 104), wherein each of the first and second communication devices (102, 104) is a peer-to-peer, Wi-Fi P2P, communication device, the linking method being **characterized by**:
transmitting a first internet protocol, IP, domain address information to a second communication device (102, 104) before the Wi-Fi P2P link with the second communication device (102, 104) is established, wherein the first IP domain address information indicates an IP domain address of each link currently used by the first communication device (102, 104);
receiving a second IP domain address information from the second communication device (102, 104) before the Wi-Fi P2P link with the second communication device (102, 104) is established, wherein the second IP domain information indicates an IP domain address of each link currently used by the second communication device (102, 104); and
when the first communication device (102, 104) is decided to be a group owner, determining, in order to avoid IP domain address conflict, whether to establish the Wi-Fi P2P link with the second communication device (102, 104) according to the first IP domain address information and the second IP domain address information.

2. The linking method of claim 1, **characterized by**:
when the first communication device (102, 104) is decided to be a group owner, determining an IP domain address of the Wi-Fi P2P link according to the first IP domain address information and the second IP domain address information.

3. The linking method of claim 2, **characterized in that** the step of determining the IP domain address of the link comprises:
selecting a specific IP domain address different from each IP domain address indicated by the first IP domain address information and each IP domain address indicated by the second IP domain address information as the IP domain address of the Wi-Fi P2P link.

4. A first communication device (102, 104) for a communication system (100), wherein the communication system (100) includes the first communication device (102, 104) and a second communication device (102, 104) and wherein each of the first and second communication devices (102, 104) is a peer-to-peer, Wi-Fi P2P, communication device; the first communication device (102, 104) being **characterized by** being adapted to employ a linking method according to any one of the preceding claims.

## Patentansprüche

1. Verbindungsverfahren, das von einer ersten Kommunikationsvorrichtung (102, 104) eingesetzt wird, um eine Verbindung mit einer zweiten Kommunikationsvorrichtung (102, 104) herzustellen, wobei jede der ersten und zweiten Kommunikationsvorrichtungen (102, 104) eine Peer-To-Peer-, Wi-Fi-P2P-, Kommunikationsvorrichtung ist, wobei das Verbindungsverfahren **gekennzeichnet ist durch**:
Senden einer ersten Internet-Protokoll-, IP-, Domain-Adressinformation an eine zweite Kommunikationsvorrichtung (102, 104), bevor die Wi-Fi-P2P-Verbindung mit der zweiten Kommunikationsvorrichtung (102, 104) hergestellt wird, wobei die erste IP-Domain-Adressinformation eine IP-Domain-Adresse jeder Verbindung anzeigt, die aktuell **durch** die erste Kommunikationsvorrichtung (102, 104) verwendet wird;
Empfangen einer zweiten IP-Domain-Adressinformation von der zweiten Kommunikationsvorrichtung (102, 104), bevor die Wi-Fi-P2P-Verbindung mit der zweiten Kommunikationsvorrichtung (102, 104) hergestellt wird, wobei die zweite IP-Domain-Information eine IP-Domain-Adresse jeder Verbindung anzeigt, die aktuell **durch** die zweite Kommunikationsvorrichtung (102, 104) verwendet wird; und
wenn entschieden wird, dass die erste Kommunikationsvorrichtung (102, 104) ein Gruppeninhaber ist, Bestimmen, ob die Wi-Fi-P2P-Verbidnung mit der zweiten Kommunikationsvorrichtung (102, 104) herzustellen ist, gemäß der ersten IP-Domain-Adressinformation und der zweiten IP-Domain-Adressinformation, um einen IP-Domain-Adressenkonflikt zu vermeiden.

2. Verbindungsverfahren gemäß Anspruch 1, **gekennzeichnet durch**:
wenn entschieden wird, dass die erste Kommunikationsvorrichtung (102, 104) ein Gruppeninhaber ist, Bestimmen einer IP-Domain-Adresse der Wi-Fi-P2P-Verbindung gemäß der ersten IP-Domain-Adressinformation und der zweiten IP-Domain-Adressinformation.

3. Verbindungsverfahren gemäß Anspruch 2, **dadurch gekennzeichnet, dass** der Schritt des Bestimmens der IP-Domain-Adresse der Verbindung umfasst:
Auswählen einer spezifischen IP-Domain-Adresse, die zu jeder IP-Domain-Adresse, die durch die erste IP-Domain-Adressinformation angezeigt wird, und zu jeder IP-Domain-Adresse, die durch die zweite IP-Domain-Adressinformation angezeigt wird, verschieden ist, als die IP-Domain-Adresse der Wi-Fi-P2P-Verbindung.

4. Eine erste Kommunikationsvorrichtung (102, 104) für ein Kommunikationssystem (100), wobei das Kommunikationssystem (100) die erste Kommunikationsvorrichtung (102, 104) und eine zweite Kommunikationsvorrichtung (102, 104) aufweist, und wobei jede der ersten und zweiten Kommunikationsvorrichtungen (102, 104) eine Peer-To-Peer-, Wi-Fi-P2P-, Kommunikationsvorrichtung ist; wobei die erste Kommunikationsvorrichtung (102, 104) **dadurch gekennzeichnet ist, dass** sie eingerichtet ist, ein Verbindungsverfahren gemäß einem der vorstehenden Ansprüche einzusetzen.

## Revendications

1. Procédé de liaison utilisé par un premier dispositif de communication (102, 104) pour établir une liaison avec un deuxième dispositif de communication (102, 104), où chacun des premier et deuxième dispositifs de communication (102, 104) est un dispositif de communication pair-à-pair, Wi-Fi P2P, le procédé de liaison étant **caractérisé par** le fait :
de transmettre des premières informations d'adresse de domaine de protocole Internet, IP, à un deuxième dispositif de communication (102, 104) avant que la liaison Wi-Fi P2P avec le deuxième dispositif de communication (102, 104) ne soit établie, où les premières informations d'adresse de domaine IP indiquent une adresse de domaine IP de chaque liaison actuellement utilisée par le premier dispositif de communication (102, 104) ;
de recevoir des deuxièmes informations d'adresse de domaine IP à partir du deuxième dispositif de communication (102, 104) avant que la liaison Wi-Fi P2P avec le deuxième dispositif de communication (102, 104) ne soit établie, où les deuxièmes informations de domaine IP indiquent une adresse de domaine IP de chaque liaison actuellement utilisée par le deuxième dispositif de communication (102, 104) ; et
lorsqu'on décide que le premier dispositif de communication (102, 104) est un propriétaire de groupe, de déterminer, afin d'éviter un conflit d'adresse de domaine IP, s'il faut établir la liaison Wi-Fi P2P avec le deuxième dispositif de communication (102, 104) selon les premières informations d'adresse de domaine IP et les deuxièmes informations d'adresse de domaine IP.

2. Procédé de liaison de la revendication 1, **caractérisé par** le fait :
lorsqu'on décide que le premier dispositif de communication (102, 104) est un propriétaire de groupe, de déterminer une adresse de domaine IP de la liaison Wi-Fi P2P selon les premières informations d'adresse de domaine IP et les deuxièmes informations d'adresse de domaine IP.

3. Procédé de liaison de la revendication 2, **caractérisé en ce que** l'étape de détermination de l'adresse de domaine IP de la liaison comprend le fait :
de sélectionner une adresse de domaine IP spécifique différente de chaque adresse de domaine IP indiquée par les premières informations d'adresse de domaine IP et de chaque adresse de domaine IP indiquée par les deuxièmes informations d'adresse de domaine IP comme étant l'adresse de domaine IP de la liaison Wi-Fi P2P.

4. Premier dispositif de communication (102, 104) pour un système de communication (100), dans lequel le système de communication (100) comporte le premier dispositif de communication (102, 104) et un deuxième dispositif de communication (102, 104), et dans lequel chacun des premier et deuxième dispositifs de communication (102, 104) est un dispositif de communication pair-à-pair, Wi-Fi P2P ; le premier dispositif de communication (102, 104) étant **caractérisé en ce qu'**il est adapté pour utiliser un procédé de liaison selon l'une quelconque des revendications précédentes.
